(19) Europäisches Patentamt
European Patent Office
Office européen des brevets

(11) Publication number: **0 134 713**
**B1**

(12) **EUROPEAN PATENT SPECIFICATION**

(45) Date of publication of patent specification: **11.11.87**

(51) Int. Cl.⁴: **G 01 N 30/92** // H01J49/04

(21) Application number: **84305618.5**

(22) Date of filing: **17.08.84**

(54) **Chromatographic plate.**

(30) Priority: **17.08.83 JP 150605/83**

(43) Date of publication of application: **20.03.85 Bulletin 85/12**

(45) Publication of the grant of the patent: **11.11.87 Bulletin 87/46**

(84) Designated contracting states: **CH DE FR LI**

(56) References cited:
**GB-A- 1 255 056**
**US-A- 3 839 205**
**US-A- 3 878 100**
**US-A- 4 267 457**

(73) Proprietor: **SHIONOGI & CO., LTD.**
**12, Dosho-machi 3-chome Higashi-ku**
**Osaka 541 (JP)**

(72) Inventor: **Nakagawa, Yuzo**
**525, 6-1, 4-chome**
**Yamadanishi Suita-shi Osaka (JP)**
Inventor: **Iwatani, Kouji**
**162, Kamimaeshima Kajigashima**
**Amagasaki-shi Hyogo (JP)**
Inventor: **Kadono, Tetsuro**
**30-3, Yamanoue-Kitamachi**
**Hirakata-shi Osaka (JP)**

(74) Representative: **Bizley, Richard Edward et al**
**BOULT, WADE & TENNANT 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

EP 0 134 713 B1

## Description

The present invention relates to chromatographic plates. In particular, it is concerned with those constructed so that, after a mixed sample is separated into its components by chromatographic development, the sample can easily be identified and quantitatively determined by mass spectrometry for each of the components.

For the mass spectrometry of a mixed sample containing minute components, the so-called GC/MS system, which combines a preceding separation step by gas chromatography with mass spectrometry, has recently been developed and is now in frequent use. This system, however, requires the extraordinarily expensive GC/MS apparatus as a matter of course. Furthermore, this system has the problem that it is barely applicable to analyses of scarcely vaporizable compounds and of unstable compounds that decompose or degrade as a result of the heat during the process of gas chromatography. In these cases, the sample necessarily is modified by alkylsilylation or acylation in order to make its vaporization easy, but it is a serious drawback to impose this additional task upon operators. Moreover, there is a risk that some of the alkylsilylated or acylated compounds obtained by the additional process are inevitably altered in part thereof.

A mixed sample containing a thermally-unstable compound, which may be changed during gas-liquid chromatography into a degraded compound which cannot be properly determined, may be developed on a laboratory-prepared thin layer chromatographic plate for separation into components. Part of the thin layer of absorbent at the specified spot is scraped off for extraction with a solvent and the extracted component can then be introduced into a mass spectrometer from its direct introduction unit. However, such manipulations of scraping and solvent extraction are not only a considerable nuisance to the operator but also difficult to perform with sufficient accuracy and will bring about a loss in the sample, i. e., an incorrect quantitative determination value. Furthermore, some compounds might be subjected to alteration such as oxidation during the operation.

The rod-type chromatographic elements disclosed in U. S. Patent 3,839,205 are available for performing FID (Flame Ionization Detection) as their principal purpose, but such elements may also be used as sample holders for mass spectrometry. However, such rod-type chromatographic elements may have, in this latter context, the following defects. Thus, in order to perform FID, a high degree of heat resistance is required of the supporting rod, the adsorbent and of the binding agent. The supporting rod, for instance, must be quartz and the binding agent must be borosilicate glass, crystallized glass or the like. This condition is not necessarily required of the sample holder for mass spectrometry and thus makes such elements unduly expensive. Furthermore, since the properties of the thin adsorbent layer may vary with individual elements, specified components to be detected may show different Rf values upon individual elements of the same lot which have been prepared at the same time, and thus comparison with an authentic sample may often be made difficult even if the authentic sample is developed simultaneously with and parallel to the sample to be determined.

There is also a sample holder which is capable of separating a mixed sample into respective components prior to or during mass spectrometry (see, for instance, U. S. Patent 4,267,457). This holder uses, as the separating means, the principle of thin-layer chromatography or gas-liquid chromatography, and enables the mass spectrometer to give molecular ions of the various sample components, successively. Although this is useful for mass spectrometry of a mixed sample containing a plurality of minute components, it is still unsatisfactory in being inconvenient to introduce the cut support headed by the developed spot into the ionization chamber of a mass spectrometer in cases where the sample is a mixture of two or, in particular, three or more components having insufficient differences in Rf values in the chromatogram.

The specification of U. S. Patent No. 3,896,661 discloses a method and an apparatus for obtaining a mass spectrum successively by introducing a thin-layer chromatographic plate which has a developed chromatogram thereon into an ionization chamber as it is, and moving the plate stepwise so that each of the positions of the component spots successively coincide with that of the ion source. According to the disclosure the handling of the chromatographic plate is convenient, although it is difficult to put the system to practical use. Such a system would be very expensive in that it requires an extremely large ionization chamber and a complex and elaborate apparatus for the stepwise transfer of the plate.

US 3,878,100 discloses a thin layer medium for use in molecular diffusion or affinity separation processes which comprises a layer of hydratable or hydrated gel material which has a scored surface. The gel is connected to an integral backing sheet or support which acts as a reservoir for an aqueous medium, this integral backing sheet having no scores or grooves upon its surface.

GB 1,255,056 discloses a thin-layer chromatographic plate which comprises alternate strips of predetermined spectral transmissivity provided with an adsorbent, and strips of opaque separator, the strips preferably being arranged alternately.

In contrast, the present invention provides a chromatographic plate which comprises a support and an adsorbent layer in contact with its front surface characterized in that the support comprises on its rear surface a plurality of linear grooves. In such plates, each of said grooves may have a uniform depth e. g. half or less of the thickness of support.

Such grooves may serve to guide a cutter which may be a simple « ampoule cutter ». In some instances, the linear grooves may be grouped into first and second rows crossing each other at right angles and said grooves in the first row may have larger spacings therebetween than those between grooves in the second row.

In the present plates, the adsorbent layer carried by the front of the support may comprise a chromatographically-active adsorbent and a suitable binding agent therefore.

The chromatographically-active adsorbent may be any adsorbent having chromatographic activity but preferably is an adsorbent for thin-layer chromatography. These include silica gel, alumina, diatomaceous earth, zeolite, aluminium silicate and porous glass powder (e. g. that known by the trade name « Porous Vycor » available from Corning Glass Works Co., Ltd., U.S.A., which is prepared by treating high silicate glass with an acid to dissolve all of the acid-soluble component out forming numerous micro pores by such dissolution). If the adsorbent has a dehydrogenating catalytic action, it is better to avoid its use in separating a sample which contains a compound which may chemically be involved in a dehydrogenation reaction.

As the support material glass is usually used, although any other heat-resistant and chemically-inert material can be used as far as it can be modified to be easily cut into strips, together with the carried adsorbent layer, by providing, e. g. by engraving, linear grooves on a rear surface thereof.

As the binding agent used for bonding the absorbent particles with each other as well as for gluing the adsorbent layer to the support, any material can be selected from available materials on condition that it does not affect the chromatographic development and/or mass spectrometry of the sample. The glass particle binder disclosed in U.S. Patent No. 3,839,205 is a preferred one but has a drawback in that it requires the additional task of baking during the preparing process. As a binding agent which does not require baking, any organic binder which fulfils the above requirements may be used, e. g., sodium polyacrylate, polyacrylamide, polyvinylformal, polyisocyanate, homopolymer or copolymers of esters of acrylic acids or methacrylic acids and glycols, or mixtures of one or more of them with colloidal silica.

If the unknown sample has no absorption band in the visible region, and is therefore colourless, it is desirable to include a fluorescent material in the adsorbent layer for convenience of handling. As the fluorescent material, any crystalline material of the activator-type can be used, and its inclusion in an amount of from 1/30 to 1/10 of that of the adsorbent is sufficient. Spots of the sample to be detected may appear as shadows cast on the surrounding luminescent surface by adsorbing ultraviolet rays irradiated onto the fluorescent material.

The linear grooves are usually arranged in a direction perpendicular to the chromatogram development direction, although a plate which has a row of grooves parallel to the development direction may be used in cases of developing samples of two or more components whose respective Rf values will give spots of sufficient distance therebetween. The spacing between any adjoining two grooves is suitably constant (normally, about 2 mm). Each of the linear grooves desirably has a uniform depth of a half or less of the thickness of the support and has a V-shaped section, but the grooves may be of any other shape provided usually that they can accomodate and guide the tip of a glass cutter.

If the tip of a glass cutter is applied to the bottom of such a groove and is glided gently along the groove, the support can usually easily be cut into strips together with the adsorbent layer by employing an extremely small flexing force.

When the plate is made of glass, the grooves may be provided by dies during molding of the plate. If readymade sheet glass is used, the grooves may be formed e. g. by a cutter (grinding wheel) before or after formation of the adsorbent layer.

Meanwhile, in addition to the row of grooves with dense spacing, another row of grooves with sparse spacing may be provided which crosses the former row at right angles. By doing this it can be rendered possible to obtain a cut strip which carries a stain of the target substance near the tip thereof and which also has a supporting segment (stem) of sufficient length, depending partly upon the manner of titrating the sample. Thus, it is easy to set such strips into the clamping means of a sample holding unit of a a mass spectrometer and thereby to simplify introduction into the ionization chamber since the size of the strip is relatively compact. By arranging the plate as previously described, a chromatographic plate of the present invention can be utilized as an excellent sample holder for a mass spectrometer or for rod FID. When used as the sample holder for a mass spectrometer, a mixed sample containing a minute component which would be changed to another substance by thermal decomposition during processing in a GC/MS system and therefore not give a molecular ion, can successfully be separated into its respective components by chromatographic development and then determined by mass spectrometry to give a molecular ion. Furthermore, the plate can be constructed with relatively inexpensive materials if the heat resistant property of the materials is kept within the limits required for mass spectrometry only.

In addition to this, since the chromatographic plates of the present invention permit parallel and simultaneous development of both the sample to be determined and an authentic sample on a single adsorbent layer, it is easy to make an identification of the position of the separated spot of the target component in the sample to be determined by reference to that of the authentic sample. By doing so, a sample holder which carries said spot near the tip thereof can be obtained.

Even in cases where the distance between the spots of the various components thus separated is insufficient, the loss of the sample is small compared with the use of a troublesome scraping

manipulation because a sample holder is obtained for each of the respective components. Thus, accurate analytical data can be obtained in a rapid operation.

Incidentally, in the case of a chromatographic plate of the present invention which has the linear grooves arranged in parallel with each other and in the direction of chromatogram development, the strip can also be used for performing FID. In such cases, the materials are required to have a high degree of heat resistance as previously described. It is, however, convenient because the positions of the developed spots are first confirmed by FID and then mass spectrometry is perfomed on a sample holder having a strip which had been in parallel with or adjacent to the strip previously used in the FID detection and cut from the same plate.

In cases where a much higher degree of separation of the various components in the mixed sample is required, a preparatory concentrating zone whose chromatographic activity is intentionally reduced to some extent may preferably be provided on the adsorbent layer in addition to a zone exclusively used for chromatographic development. A sample titrated on this preparatory concentrating zone will be concentrated by an ascending developing solvent near the boundary shared in common by the developing and concentrating zones, and then shifted to the developing zone to give linear or rectangular spots extended in the direction perpendicular to the development direction. This is particularly advantageous in obtaining definite separation of the components whose Rf values are so close that the peripheral parts of developed spots may otherwise overlap with each other.

In cases where the binding agent is fine glass particles and the adsorbent layer is formed by sintering, the abovementioned concentrating zone may be a thin sintered layer solely composed of glass particles with no adsorbent.

The invention will now be further described by reference to the accompanying drawings, in which :

Figs. 1 and 2, each schematically represents a chromatographic plate, an embodiment of the present invention, wherein (a) is its cross sectional view, (a') is a partly enlarged view thereof, (b) is a plan view in a state wherein a mixed sample and authentic samples are developed, (c) is a plan view of the strip cut from the plate and (d) is a schematic view showing the state wherein the cut strip is positioned on a holder fastening tool as a sample holder for a mass spectrometer ;

Fig. 3 is a chromatogram (A) and an FID chart (B) of the mixed sample (1) and the authentic samples ;

Figs 4-7 are each a mass spectrum which corresponds to the components (I), (II), (III) or (IV) of the mixed sample (I) or the authentic samples ;

Fig. 8 is a chromatogram (A) and an FID chart (B) of the mixed sample (2) and the authentic samples ;

Fig. 9 is a mass spectrum which corresponds to component (V) in the mixed sample (2) ; and

Fig. 10 is a chromatogram (A) and an FID chart (B) of the mixed sample (3) and the authentic samples.

Example 1 (Plate with linear grooves in a direction which crosses the development direction at a right angle)

Fig. 1 schematically illustrates the plate. In the drawing, (a) is a sectional view, (a') is a partly enlarged view thereof, (b) is a plan view of the plate on which a mixed sample is developed, (c) is a strip after being cut and (d) indicates the same strip after being secured by the clamp means of a mass spectrometer as a sample holder thereof.

Details of this plate will be indicated together with Measurement (1) which follows later.

Thus, the chromatographic plate shown in Figs. 1 (a), (a') and (b) is composed of a glass plate 1 and an adsorbent layer 2 on its front with a row of linear grooves 11 arranged in parallel with each other on the rear of the plate in a direction which crosses the chromatogram development direction at a right angle. A mixed sample X containing an unknown substance X' and authentic samples A, B and C are titrated at sites 21 (indicated by blank circles) and subjected to ascending development by a known method. The substances in the sample ascend in accordance with the intrinsic Rf values of the respective substances to give the illustrated chromatogram after a given time period. As seen in the chromatogram, the respective substances are separated at sites (indicated by solid black circles) which correspond to A, B, X' and C, respectively.

If the substance in the sample is colourless, the site of the spot can nevertheless be detected by virtue of the fluorescent material contained in the adsorbent and the intrinsic ultra-violet ray absorption of the substance. After the site of the spot is found, the plate is cut into strips as shown in (c), first by sliding a glass cutter (whose tip is applied to the bottom of the linear groove) along the groove and then by applying a flexing force using the finger tips. These strips are then shortened to the required length at given points indicated by wavy lines 13 and the stems thereof 12 secured by clamps 3, 31 (resilient tips) of the sample holding unit of a mass spectrometer as indicated by (d) for introduction into the ionization chamber.

Since the unknown mixed sample X can be developed simultaneously and in parallel with the authentic samples A, B and C under identical conditions, the positions of the respective components in the unknown sample can be identified easily and accurately to specify the unknown substance X'.

Example 2 (Plate with linear grooves in a direction parallel to the development direction)

Fig. 2 schematically illustrates this plate.

Reference characters and numerals identical with those used in Fig. 1 are also used here. Thus, most of the above description applies to this Example without alteration. The difference is, however, that the linear grooves 11 are provided in a direction parallel to the chromatogram development direction instead of crossing the latter direction at right angles. By this arrangement, the strip (c) resulting from the cleaving operation carries the spots of all substances included in the sample. When this strip is subjected to FID, an FID chart which represents all substances in sequence is obtained. Thereafter, it can be shortened at the position of, for example, line 13 to be subjected to MS as described above with reference to Example 1.

In addition, although representation is omitted from the drawing, an additional row of linear grooves may be engraved with advantage. These further linear grooves cross the previously mentioned grooves at right angles and have larger spacings between adjoining grooves than the latter. By this arrangement, strips can be cut easily at the abovementioned line cutting point 13.

Example 3 (Plate with a concentrating zone)

A plate as shown in either of Figs. 1 and 2 may be modified to provide an adsorbent layer divided into a concentrating zone and a developing zone ; the former occupying an area of about 25 mm in width from one end of the plate along the lengthwise direction and the latter occupying the rest.

The site for titrating samples is in the above mentioned concentrating zone and near the borderline between that and the developing zone. When using the plate of this Example, since samples are separated to form rectangular and dense spots after being separated, the most advantageous utilization of cleavage of the plate into strips is made possible. This is an important point of the present invention.

The detail, methods of preparation and use of such plates are generally as described with reference to Examples 1 and 2 above, although some deviation from these will be described in detail together with Measurement 2 which follows.

In the following description, the practical advantages of the plates, whose construction has briefly been illustrated in each of the abovementioned Examples, will now be indicated by way of Measurements. The details of the plate used in the actual measurements are given together with the chromatographic separation of mixed samples on these plates, the FID detection and the results of a mass spectrometry analysis which uses the strips carrying the developed chromatogram.

Measurement 1

Plate used (those of Examples 1 and 2)

1) Support : Soda lime glass (50 × 200 × 2 mm)
2) Linear grooves : spacings 2 mm, depth 1 mm
3) Adsorbent : Kieselgel H 60, available from Merck AG
4) Fluorescent material : $Zn_2SiO_4/Mn$
5) Binding agent : Soda lime glass powder (mean diameter : 7-8 μm)
6) Mixing ratio : adsorbent : binding agent : fluorescent material = 1 : 3-4 : 0.25
7) Thin layer : Prepared by sintering method (as described in Japanese Patent No. 657,467), baked at 680 °C for 10 min. to obtain a thin layer of thickness 200 μm (after being sintered).

Sample (1) (mixture containing benzodiazepines, 1)

In Fig. 3, a chromatogram (A) of the mixed sample (1) and the authentic samples (reference substances) and an FID chart (B) obtained with a cut strip thereof are shown comparatively.

Chromatography : Developing solvent : dichloromethane : methanol : ethyl acetate : n-hexane = 12 : 1 : 3 : 3

FID : Iatoroscan (available from Iatoron K.K.)

As shown by the chromatogram in Fig. 3 (A), when using a plate prepared in accordance with the present invention, the unknown sample can be developed simultaneously with authentic samples under the same conditions and, after confirming the existence of a specific substance by comparing the Rf value of the sample, the plate can be cut into strips which carry the target components of the sample.

In the case of a plate of the type disclosed in Example 1, the plate can be cut along the direction which crosses the development direction at a right angle to give a sample holder for a mass spectrometer. In the case of Example 2-type plates, the sample holding strip can be prepared by cleaving the plate along a direction parallel to the development direction to make a stick or rod which may be used for FID to give an FID chart such as shown in Fig. 3 (B). Meanwhile a strip which was parallel to the stick before cleavage can be shortened to a convenient length for the sample holder for a mass spectrometer.

Mass spectra of the respective components of the mixed sample are shown in Figs. 4-7. Fig. 4 is a mass spectrum of lorazepam which corresponds to the first spot (I) of the chromatogram (Fig. 3) (A), an FID chart of which is Fig. 3(B). Fig. 5 is that of chlorodesmethyldiazepam of spot (II), Fig. 6 is that of chlorodiazepam of spot (III) and Fig. 7 is that of the aminoquinolone derivative of spot (IV).

Of these components, when performing the known GC/MS technique on chlorodiazepam (III) and the aminoquinolone derivative (IV), mass spectra similar to those obtained by using the plate of the present invention (Figs. 6 and 7) are obtained without being subjected to alteration. Namely :

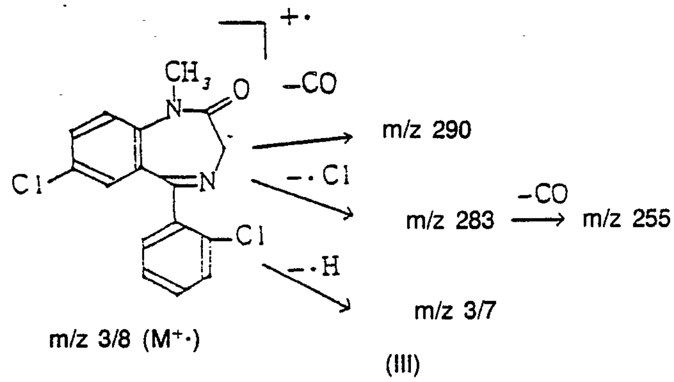


(III)

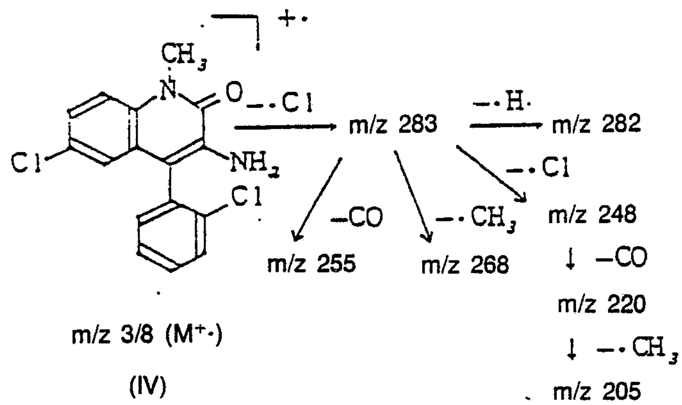


(IV)

Incidentally, fragmentation of the main peaks in the mass spectrum (Fig. 4) of lorazepam when lorazepam is separated by using the plate of the present invention is shown by the following formulae. As shown, a molecular ion is obtained as in the case of the conventional direct introduction method.

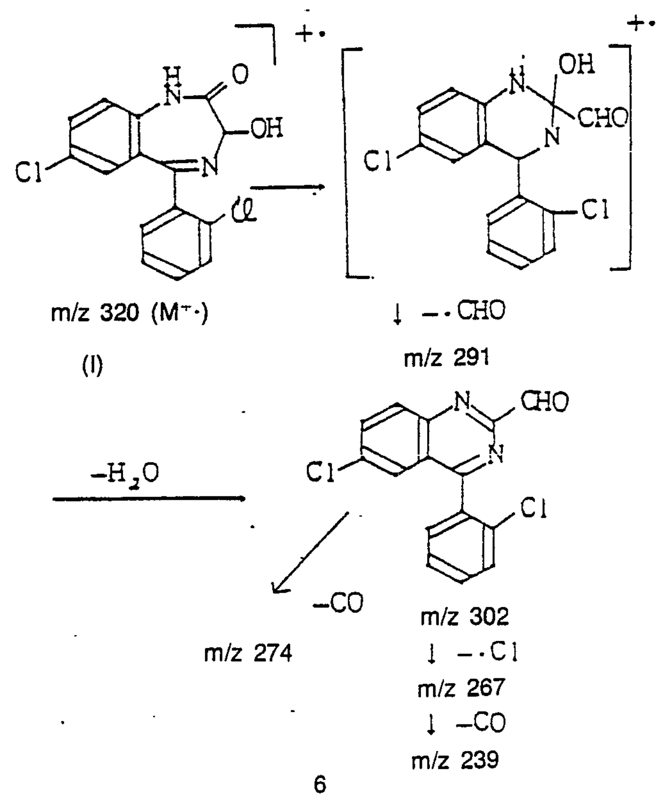


(I)

In contrast, if it is subjected to GC/MS dehydration takes place first and the peaks of m/z 291 disappear (spectrum omitted).

The fragmentation of the main peaks in the mass spectrum (Fig. 5) of chlorodesmethyldiazem (II) is similar to that of direct introduction and is shown in the following formulae :

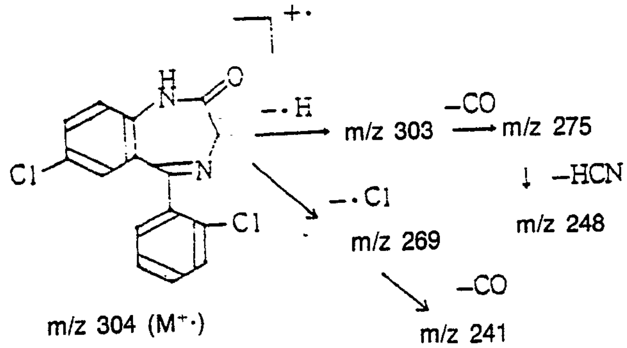


(II)

However, in the case of GC/MS the compound is partly decomposed by heat as shown in the following formula (deduction) to give a different mass spectrum (omitted).

(II) 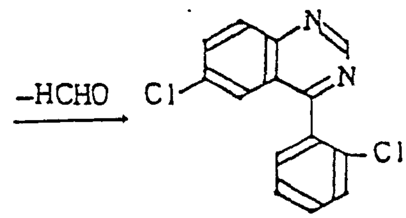


Sample (2) (Mixture containing benzodiazepines, 2)

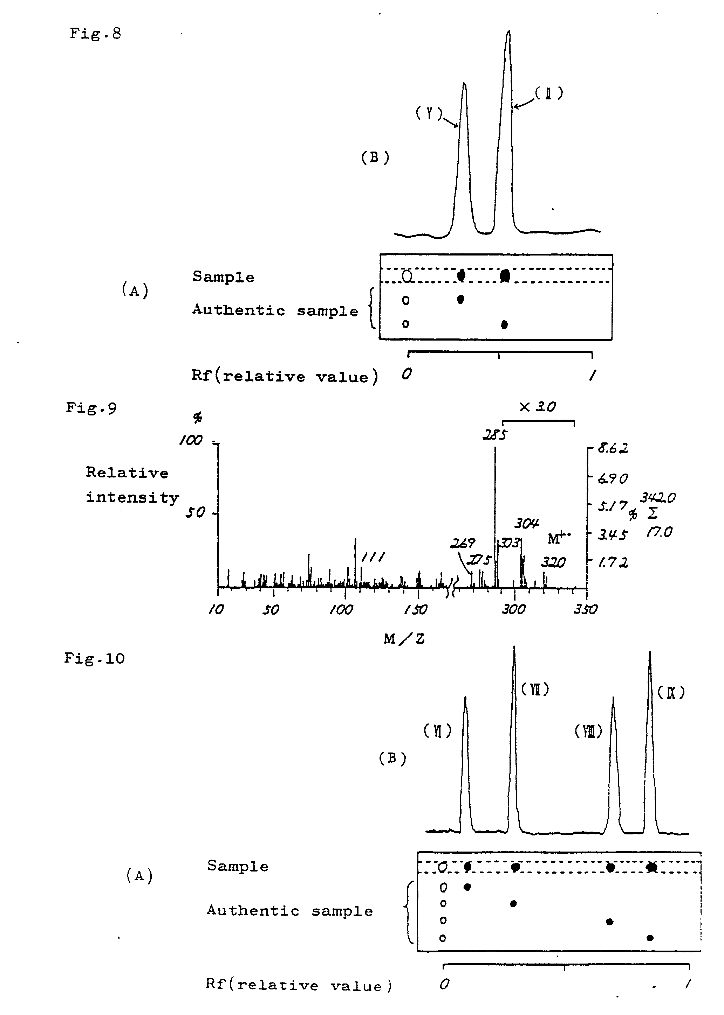

In Fig. 8, a chromatogram (A) of the mixed sample (2) and authentic samples developed on a plate of the present invention (Example 2 type) and an FID chart (B) obtained with the strips (Fig. 2(C)) are shown comparatively.

Chromatography : Developing solvent, dichloromethane : methanol : ethyl acetate : n-hexane = 32 : 1 : 3 : 3.

FID : Iatroscan.

From the abovementioned mixed sample, the mass spectrum of chlorodemoxepam (V), which corresponds to the first spot, is shown in Fig. 9. Fragmentation of the main peaks of the compound is as shown in the following formulae which support the detection of a molecular ion. (Since chlorodesmethyldiazepam (II) which corresponds to the second spot is identical to that shown in Fig. 5, it is omitted).

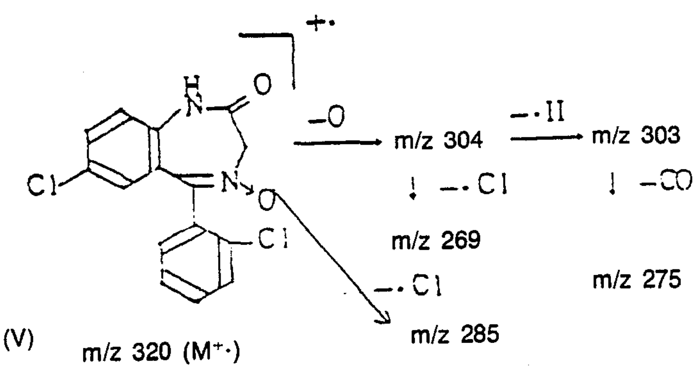


(V) m/z 320 (M+·)

When performing GC/MS on this sample, chlorodemoxepam (V) is decomposed by heat during the GC process to give no molecular ion but to give a spectrum similar to that of (II). (Spectra of more highly decomposed products (unidentified) are also obtained).

Sample (3) (Steroidal mixture)

A chromatogram (A) and an FID chart (B) shown in Fig. 10 are obtained by performing a series of

experiments similar to the abovementioned Measurement on this sample (Mixed sample (3)). Results of mass spectrometric measurements of the respective spots (mass number (m/z) and relative intensity) are as follows :

First spot (VI) Hydrocortisone :

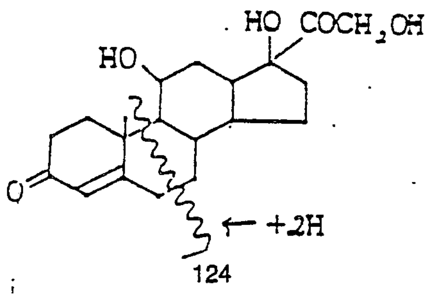

m/z 362 ($M^{+\cdot}$, 56 %)
344 (40)
326 (22)
302 (30)
285 (100)
124 (45)

$C_{21}H_{30}O_5$ (362)

(Relative intensity)

Second spot (VII) Cortisone :

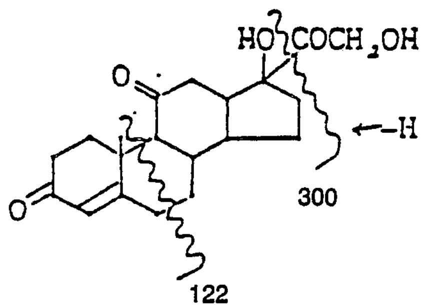

m/z 360 ($M^{+\cdot}$, 30 %)
342 (5)
300 (40)
122 (100)

$C_{21}H_{25}O_5$ (360)

Third spot (VIII) Testosterone :

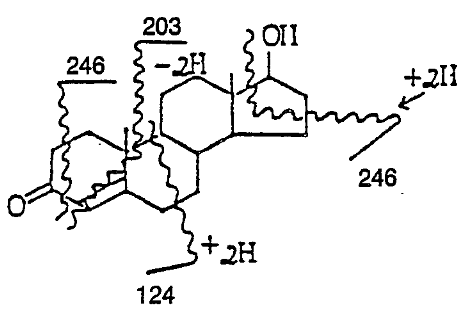

m/z 288 ($M^{+\cdot}$, 34 %)
246 (40)
228 (15)
203 (20)
124 (100)

$C_{19}H_{25}O_2$ (288)

Fourth spot (IX) Progesterone :

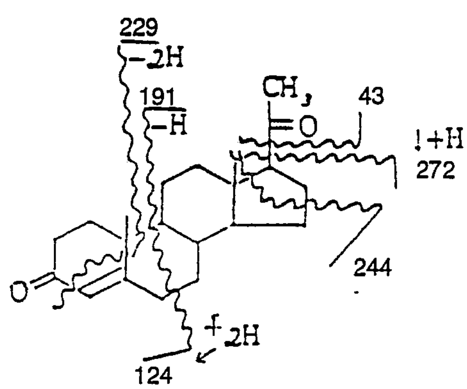

m/z 3/4 ($M^{+\cdot}$, 40 %)
272 (42)
244 (20)
229 (42)
191 (22)
124 (100)
43 (85)

$C_{21}H_{30}O_2$ (314)

Measurement 2

Plate used (One with the concentrating zone of Example 3)

1) Support plate : identical to that used in Measurement 1.

2) Linear grooves : ditto.

3) Concentrating zone (25 mm in width from one end) : Mixture of quartz powder (15-20 μm) : UV transmitting glass powder (7-8 μm) : Fluorescent material (the same as that used in Measurement 1) = 4 : 1 : 0.25.

4) Developing zone : Mixture of Kieselgel H60, of Merck AG. : UV transmitting glass powder (7-8 μm) : Fluorescent material (as disclosed above) = 1 : 3-4 : 0.25.

5) Formation of the thin layer : (Sintering method as that of Measurement 1, but baked at 720 °C for 12 min.).

By separating a steroidal mixed sample as used in Measurement 1, using a plate prepared in the abovementioned manner, the following chromatographic results are obtained.

Developing solvent : Chloroform : methanol = 100 : 1 Rf value : Hydrocortisone, 0.025 ; Cortisone, 0.07 ; Testosterone, 0.44 ; Progesterone, 0.72.

Although the Rf value of hydrocortisone is close to that of cortisone, the former is sharply separated from the latter on the cut strip by virtue of the concentrating function of the plate. The results of the mass spectrometry are the same as previously described.

**Claims**

1. A chromatographic plate which comprises a support (1) and a adsorbent layer (2) in contact with its front surface characterized in that the support (1) comprises on its rear surface a plurality of linear grooves (11).

2. A plate as claimed in claim 1, wherein the grooves (11) have a depth of no more than half the thickness of the support (1).

3. A plate as claimed in claim 1 or claim 2, wherein the grooves (11) are of uniform depth.

4. A plate as claimed in any one of claims 1 to 3, wherein each of the grooves (11) is adapted to guide a cutter.

5. A plate as claimed in any one of claims 1 to 4, wherein the grooves (11) comprise first and second rows of linear grooves, the first and second rows crossing each other at right angles.

6. A plate as claimed in claim 5, wherein the grooves of the first row have larger spacing therebetween than the grooves of the second row.

7. A plate as claimed in any one of claims 1 to 6, wherein in adsorbent layer (2) carried by a front surface of the support (1) is divided into a chromatogram development zone and a preparatory concentrating zone which shares a common boundary with the chromatogram development zone.

8. A plate as claimed in claim 7, wherein the adsorbent in the preparatory concentrating zone is less chromatographically-active than that in the chromatogram development zone.

9. A plate as claimed in claim 7 or claim 8, wherein the concentrating zone is composed solely of a sintered body of glass powder covering the support.

10. The use of a chromatographic plate as claimed in any one of claims 1 to 9 for the analysis of an unknown sample by chromatography.

**Patentansprüche**

1. Chromatografieplatte, umfassend einen Träger (1) und eine adsorbierende Schicht (2) in jeweiligem Kontakt mit deren vorderen Oberflächen, dadurch gekennzeichnet, daß der Träger (1) an seiner Rückseite eine Mehrzahl von linearen Kerben (11) aufweist.

2. Platte gemäß Anspruch 1, bei welcher die Kerben (11) eine Tiefe haben, die nicht größer als die Hälfte der Dicke des Trägers (1) ist.

3. Platte gemäß Anspruch 1 oder 2, bei welcher die Kerben (11) eine gleichmäßige Tiefe haben.

4. Platte gemäß einem der Ansprüche 1 bis 3, bei welcher jeder der Kerben (11) zur Führung eines Cutters eingerichtet ist.

5. Platte gemäß einem der Ansprüche 1 bis 4, bei welcher die Kerben (11) erste und zweite Reihen von linearen Kerben umfassen, wobei sich die ersten und zweiten Reihen jeweils im rechten Winkel schneiden.

6. Platte gemäß Anspruch 5, bei welcher die Kerben der ersten Reihe einen größeren Abstand voneinander haben als die Kerben der zweiten Reihe.

7. Platte gemäß einem der Ansprüche 1 bis 6, bei welcher eine adsorbierende Schicht (2), die von der vorderen Oberfläche des Trägers (1) getragen wird, in eine Chromatogramm-Entwicklungszone und eine

vorbereitende Konzentrierungszone und eine vorbereitende Konzentrierungszone, die eine gemeinsame Grenze mit der Chromatogramm-Entwicklungszone hat, aufgeteilt ist.

8. Platte gemäß Anspruch 7, bei welcher das Adsorptionsmittel in der vorbereitenden Konzentrierungszone chromatografisch weniger aktiv ist als das in der Chromatogramm-Entwicklungszone.

9. Platte gemäß Anspruch 7 oder 8, bei welcher die Konzentrierungszone ausschließlich aus einem gesinterten Körper aus Glaspulver, welcher den Träger bedeckt, aufgebaut ist.

10. Verwendung einer chromatografischen Platte gemäß einem der Ansprüche 1 bis 9 für die Analyse einer unbekannten Probe durch Chromatografie.

**Revendications**

1. Plaque chromatographique, qui comprend un support (1) et une couche adsorbante (2) en contact avec sa surface frontale, caractérisée en ce que le support (1) comprend sur sa surface arrière une pluralité de rainures linéaires (11).

2. Plaque selon la revendication 1, dans laquelle les rainures (11) ont une profondeur qui ne dépasse pas la moitié de l'épaisseur du support (1).

3. Plaque selon la revendication 1 ou la revendication 2, dans laquelle les rainures (11) ont une profondeur uniforme.

4. Plaque selon l'une quelconque des revendications 1 à 3, dans laquelle chacune des rainures (11) est adaptée de façon à guider un instrument coupant.

5. Plaque selon l'une quelconque des revendications 1 à 4, dans laquelle les rainures (11) comprennent une première et une deuxième rangées de rainures linéaires, la première rangée et la deuxième rangée se coupant l'une l'autre à angle droit.

6. Plaque selon la revendication 5, dans laquelle les rainures de la première rangée ont entre elles une distance plus grande que les rainures de la deuxième rangée.

7. Plaque selon l'une quelconque des revendications 1 à 6, dans laquelle une couche adsorbante (2) portée par une surface frontale du support (1) est subdivisée en une zone de développement du chromatogramme et en une zone de concentration préparatoire qui partage une frontière commune avec la zone de développement du chromatogramme.

8. Plaque selon la revendication 7, dans laquelle l'adsorbant, dans la zone de concentration préparatoire, présente une activité chromatographique plus faible que celui de la zone de développement du chromatogramme.

9. Plaque selon la revendication 7 ou la revendication 8, dans laquelle la zone de concentration est constituée uniquement d'un corps fritté de poudre de verre recouvrant le support.

10. Utilisation d'une plaque chromatographique selon l'une quelconque des revendications 1 à 9 pour l'analyse d'un échantillon inconnu par chromatographie.

Fig.1

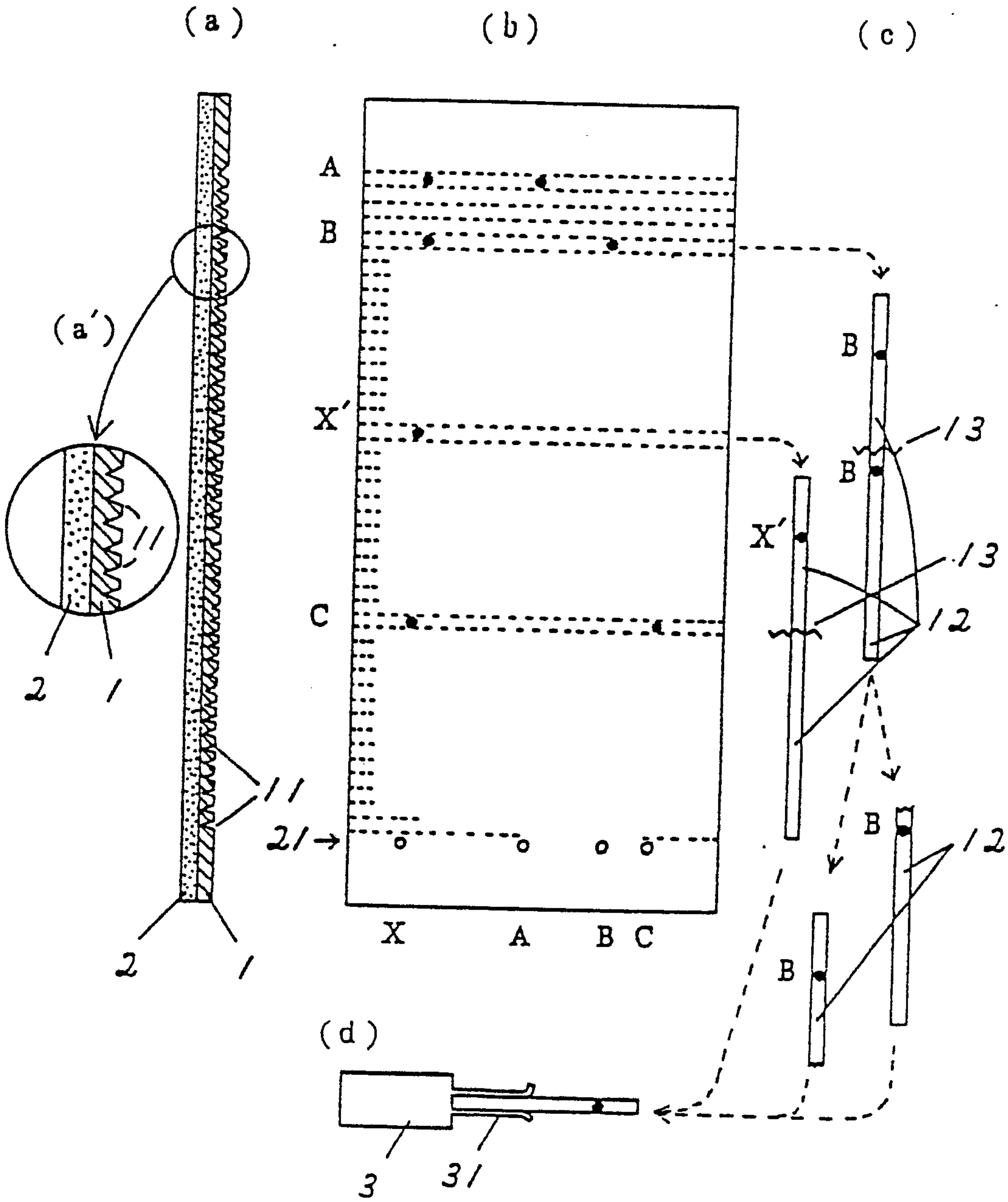

Fig.2

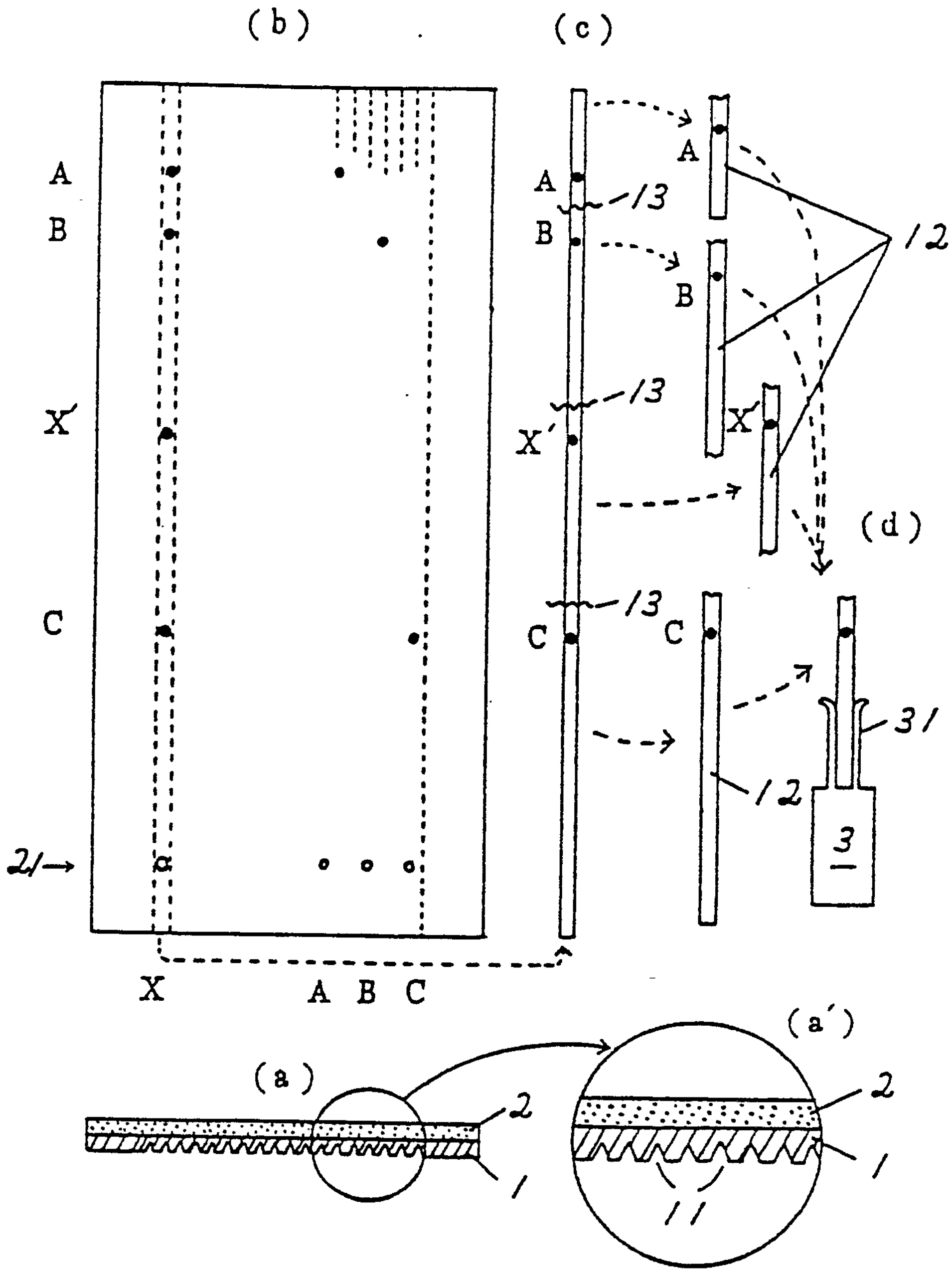

Fig.3

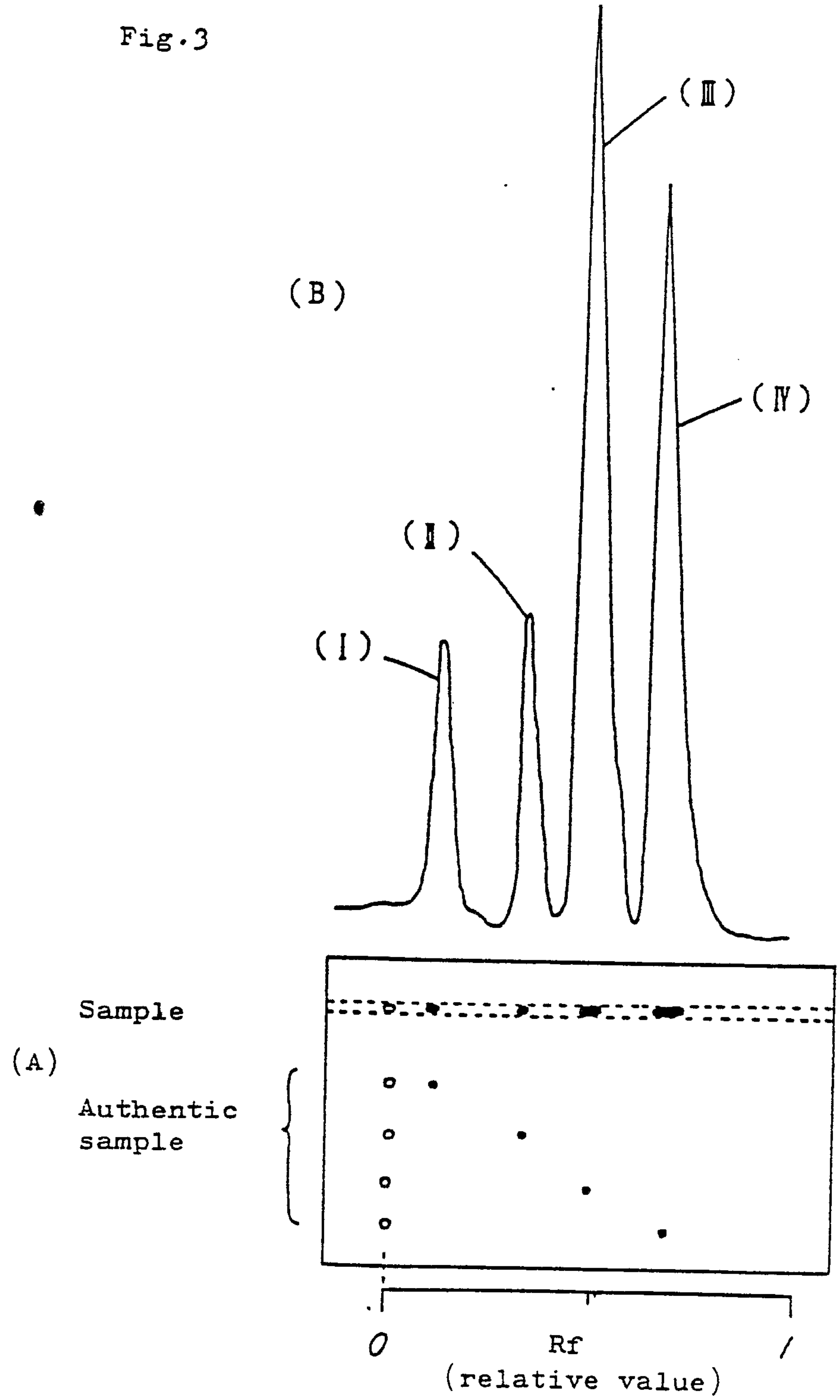

Fig.4

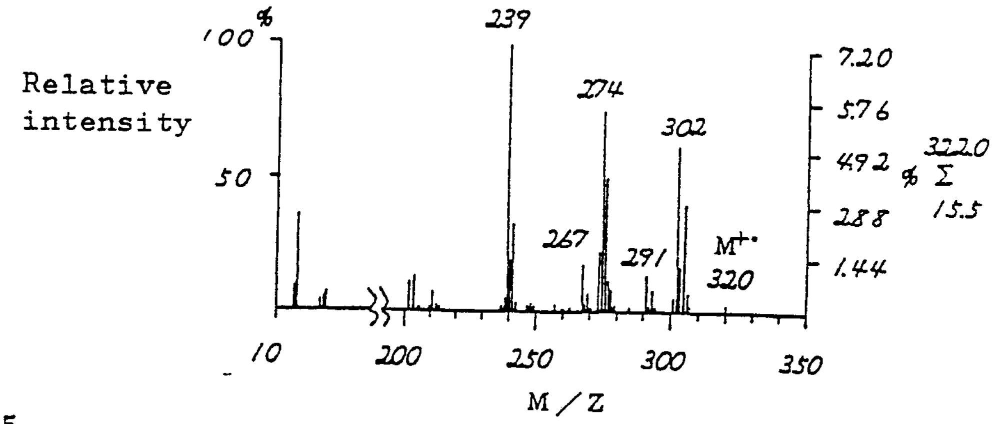


Fig.5

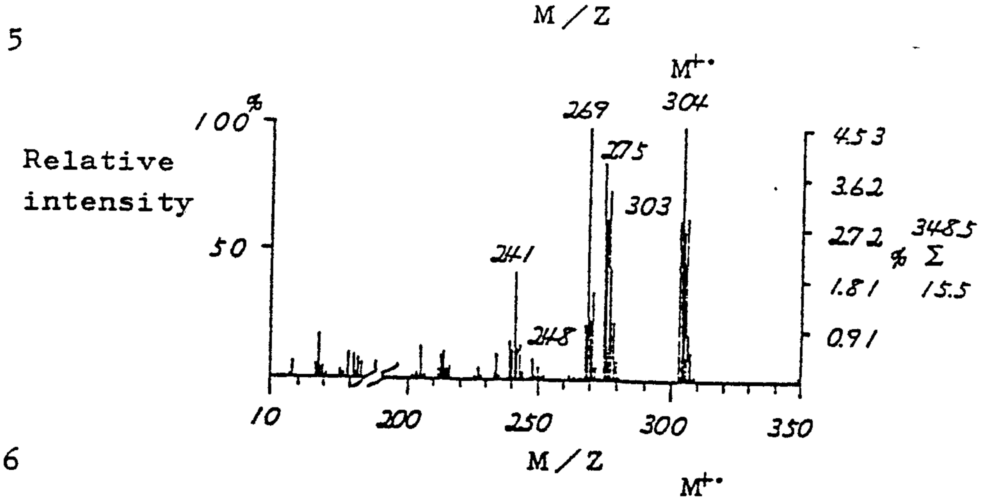


Fig.6

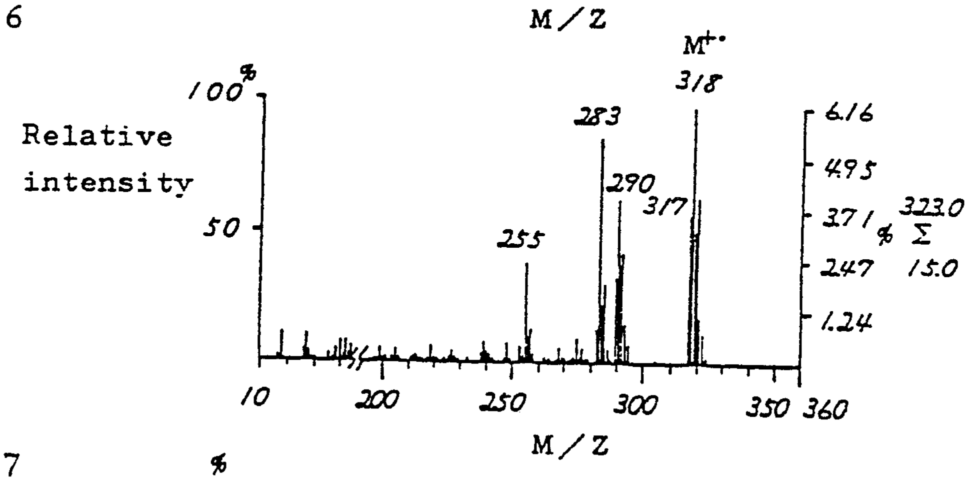


Fig.7

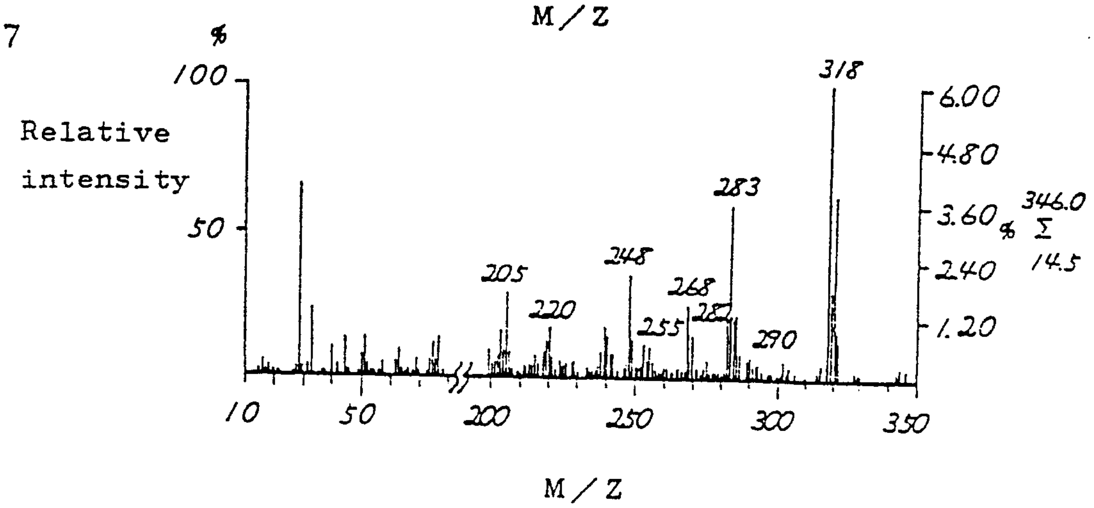

Fig.8

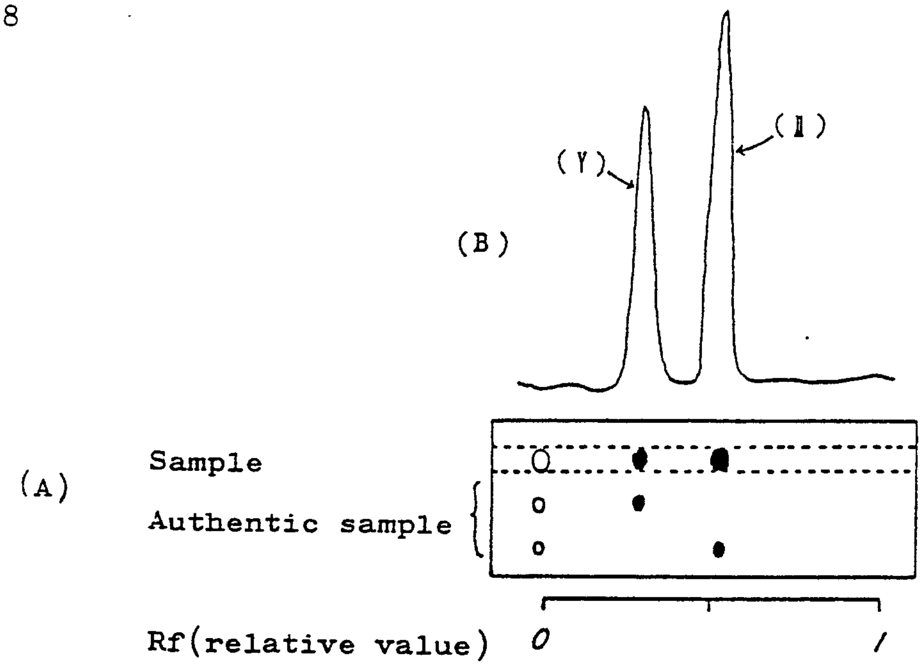


Fig.9

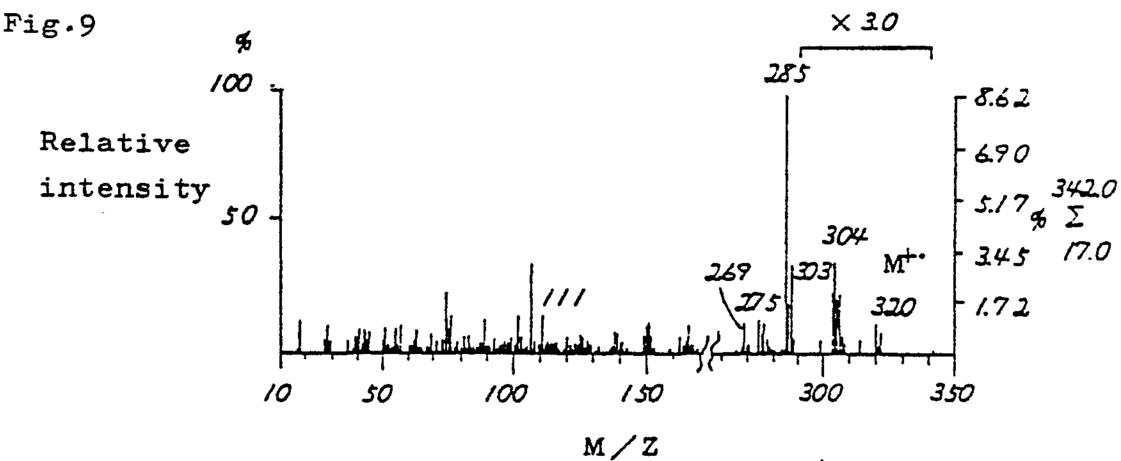


Fig.10